# EUROPÄISCHE PATENTSCHRIFT

(11) **EP 1 538 721 B1**
(45) Veröffentlichungstag und Bekanntmachung des Hinweises auf die Patenterteilung: **02.05.2007**
(21) Anmeldenummer: 04106115.1
(22) Anmeldetag: 26.11.2004
(51) Int. Cl.: H02G 11/00, E05D 11/00

(54) **Kabelübergangsstück zur elektrischen Anspeisung von Verschlussantrieben oder dergleichen**
Cable transition section for electrical supply of lock drive or similar
Section de transition de câble pour alimentation électrique d'entraînement de serrure ou similaire

(30) Priorität: 05.12.2003 AT 19592003
(43) Veröffentlichungstag der Anmeldung: 08.06.2005
(73) Patentinhaber: ROTO FRANK AG, 70771 Leinfelden-Echterdingen (DE)
(72) Erfinder: Leitner, Eduard, 8713, St. Stefan ob Leoben (AT)
(74) Vertreter: Müllner, Martin

(56) Entgegenhaltungen:
- DE-A1- 3 105 311
- DE-A1- 10 126 785
- DE-C1- 10 053 153
- DE-C1- 10 234 413

## Beschreibung

### Technisches Gebiet

Die Erfindung betrifft ein Kabelübergangsstück zur elektrischen Anspeisung von Verschlussantrieben, zwischen einem um eine Drehachse schwenkbaren Flügel, z.B. einem Türblatt, und einem Rahmen, z.B. Türstock, mit einem in einem elastischen und biegsamen Mantel, z.B. einer Schraubenfeder oder einem Panzerschlauch, verschiebbar geführten Kabel, wobei der Mantel sowohl am Flügel als auch am Rahmen gegebenenfalls lösbar befestigt ist und der Mantel bei geschlossenem Flügel in einer Ausnehmung, insbesondere in einer flügel- oder rahmenseitigen Wanne, im Falz des Flügels oder Rahmens liegt.

Ein derartiges Kabelübergangsstück ist aus DE 100 53 153 C bekannt.

### Stand der Technik

Elektrische Türöffner sind seit Jahrzehnten bekannt, die, wenn sie bei einer Doppelflügeltür im Stehflügel untergebracht sind, einer flexiblen Anspeisung vom Türstock zum Stehflügel bedürfen. Dies für den Fall, dass der Stehflügel geöffnet werden muss. Heute sind Mehrfachverriegelungen sehr gefragt, die selbstverständlich einen höheren Kraftaufwand insbesondere bei Schlüsselbetätigung erfordern, da ja über Schubstangen eine Vielzahl von Riegeln in Schließstücke ein- und ausgeschoben werden müssen. Es wurden daher bereits elektrische Verschlussantriebe für diese Verriegelungen entwickelt, die im Flügel angeordnet sind und daher flexibel über die Türbänder oder über geschützte Kabel angespeist werden.

Eine bekannte Ausführungsform setzt eine Schraubenfeder als schützenden Mantel für ein im Inneren frei verschiebbares Kabel an. Die Schraubenfeder endet einerseits (flügelseitig) an einem Falz und anderseits in einer (stockseitigen) Wanne im Falz, sodass die Schraubenfeder bei geschlossenem Flügel im Falz nicht eingeklemmt wird, sondern sich in die Wanne legt. Das im Inneren der Schraubenfeder lose geführte Kabel hat nicht die Elastizität der Schraubenfeder und es kommt daher zu Relativbewegungen und zu Beanspruchungen an den Einspannungen an den Enden der Schraubenfeder, dort wo auch das Kabel am Falz an der Wanne befestigt ist.

### Offenbarung der Erfindung

### Technische Aufgabe

Die Erfindung zielt darauf ab, das Kabelübergangsstück der eingangs beschriebenen Art zu verbessern.

### Technische Lösung

Dies wird dadurch erreicht, dass ein flaches Gehäuse, insbesondere aus Kunststoff, vorgesehen und der Mantel mit einem Ende an eine Gehäusedurchführung an einer Gehäuseschmalseite angeschlossen ist und dass das Gehäuse zur Aufnahme des beim Schließen des Flügels aus dem Mantel austretenden und durch die Gehäusedurchführung frei in den Gehäuseinnenraum einschiebbaren Kabels bzw. der Kabelschlaufe ausgebildet ist. Das flache Gehäuse hält also eingangsseitig den Mantel fest, ohne das Kabel dort zu klemmen und nimmt im Inneren das Kabel auf, insbesondere die sich beim Schließen des Flügels bildende Kabelschlaufe, während sich die Schraubenfeder entspannt in die Wanne legt. Dabei ist es zweckmäßig, wenn im Inneren des Gehäuses nächst einer Kabelaustrittsöffnung eine Klemmbefestigung, z.B. eine Klemmschelle, für das freie Ende der Kabelschlaufe vorgesehen ist. Diese Klemmbefestigung hält das Kabel an dem der Befestigung des Mantels entgegengesetzten Ende fest. Dort kann auch eine Blockklemme für den Anschluss einer von außen kommenden elektrischen Zuleitung vorgesehen sein. Das flache Gehäuse hat eine Breite, die etwas größer als der Kabeldurchmesser ist, und wird in eine Ausnehmung des Flügels oder Stockes versenkt. Eine bevorzugte Ausführungsform ist dadurch gekennzeichnet, dass das Gehäuse unmittelbar an die Wanne anschließt und gegebenenfalls einstückig mit der Wanne ausgebildet ist. Die Wanne mit dem erfindungsgemäßen Gehäuse kann im Flügel oder im Rahmen vorgesehen sein. Eine Konsole am Gehäuse dient der Befestigung des Mantels und der unbehinderten Durchführung des Kabels in das Gehäuseinnere.

Ein weiteres Merkmal sieht vor, dass das Kabel an seinem dem Gehäuse gegenüberliegenden Ende eine Steckverbindung zum Rahmen bzw. Flügel aufweist. Der Stecker ermöglicht das Abkuppeln der elektrischen Verbindung für den Fall, dass der Flügel ausgehängt werden muss.

Schließlich ist vorgesehen, dass das Gehäuse einen Flansch sowie mindestens eine Zylinderkopfschraube zur Befestigung aufweist und dass die Zylinderkopfschraube als Klemmschraube für das Ende des Mantels vorgesehen ist.

### Kurze Beschreibung der Zeichnungen

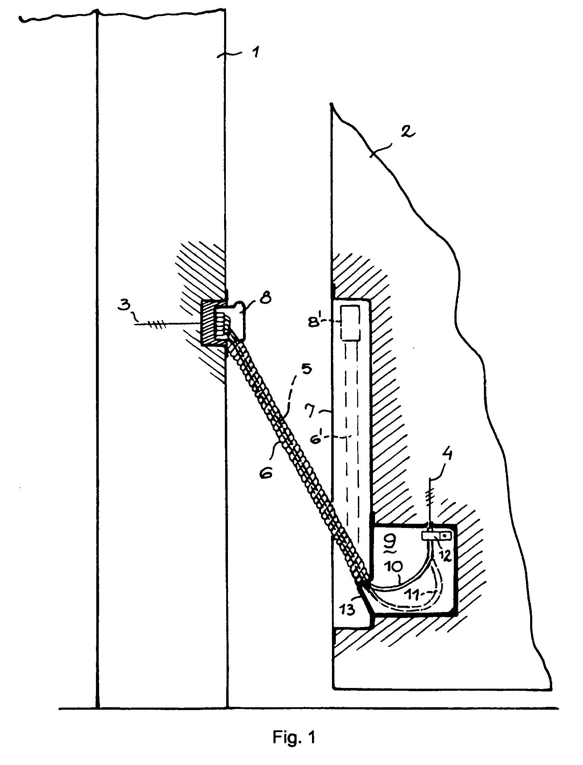

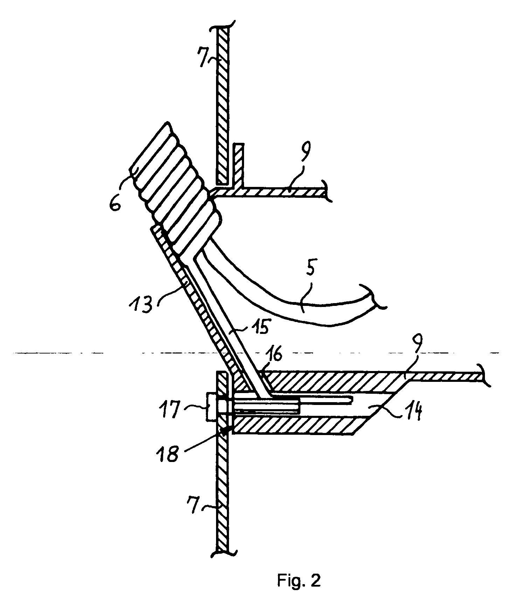

Ein Ausführungsbeispiel des Erfindungsgegenstandes ist in den beiliegenden Zeichnungen schematisch dargestellt. Fig. 1 zeigt symbolhaft einen Teil eines Türstockes als Rahmen und daneben einen geöffneten Flügel, hier ein Türblatt, das in der Offenstellung in die Zeichenebene gedreht wurde, wobei nur ein Eckbereich unter Weglassung eines Türbandes abgebildet ist; und Fig. 2 eine Detailansicht des in Fig. 1 dargestellten Eintritts eines Mantels in den Türstock.

### Beste Ausführungsform der Erfindung

In einem Rahmen 1 ist ein Flügel 2 um eine Achse drehbar, wie dies etwa für ein Türblatt in einem Türstock der Fall ist. Um vom feststehenden Rahmen 1 elektrische Energie in den drehbaren Flügel 2 überzuleiten, ist ein Kabelübergangsstück zwischen einer rahmenseitigen und der flügelseitigen elektrischen Verdrahtung 3 bzw. 4 vorgesehen. Im Flügel 2 führt die Verdrahtung 4 beispielsweise zu einem elektrischen Antrieb (nicht dargestellt) für einen Mehrriegelverschluss, sodass per Tastendruck, einfache kurze Schlüsselbetätigung oder Codeeingabe bzw. -erkennung ohne Kraftaufwand ein Öffnen oder Schließen selbsttätig erfolgen kann. Der freie Raum zwischen dem Rahmen 1 und dem geöffneten Flügel 2 wird durch ein Kabel 5 in einem elastischen biegsamen Mantel 6, hier in Form einer Schraubenfeder, überbrückt. Die Schraubenfeder dehnt sich, wenn der Flügel 2 geöffnet wird (volle Linien gemäß Zeichnung), und sie legt sich entspannt in eine Wanne 7 in einer Ausnehmung im Falz des Flügels 2, wenn der Flügel 2 geschlossen wird. Der Mantel 6, also hier die Schraubenfeder, ist an einem Ende an einem Stecker 8 und am anderen Ende an oder nächst einem Gehäuse 9 fixiert. Das elektrische Kabel 5 ist ebenfalls am Stecker 8 fixiert, läuft jedoch am anderen Federende unbehindert in das Gehäuse 9 ein. Im Inneren des Gehäuses 9 bildet das Kabel 5 gemäß Fig.1 bei geöffnetem Flügel 2 und gedehnter Schraubenfeder (Mantel 6) eine verkürzte Kabelschlaufe 10 (volle Linien), die sich beim Schließen bzw. bei geschlossener Tür und sich verkürzender Schraubenfeder zur Kabelschlaufe 11 vergrößert. Das Gehäuse 9 gewährleistet somit jenen Platzbedarf, der für ein ungehindertes und reibungsloses (damit abnützungsfreies) Ausschieben des Kabels 5 zur Kabelschlaufe 11 beim Schließen und Einziehen des Kabels 5 zur Kabelschlaufe 10 beim Öffnen des Flügels 2 erforderlich ist.

Hier sei nochmals vermerkt, dass die Zeichnung mit den vollen Linien die in eine Ebene (Zeichenebene) gelegte Offenstellung des Flügels 2 zeigt und dass in der selben Zeichnung die Lage des Steckers 8' und Mantels 6' (Schraubenfeder) in der Wanne 7 bei geschlossener Stellung des Flügels (2) strichliert dargestellt ist. Damit wird die Längenänderung des Mantels 6 ebenso klar wie die unterschiedliche Schlaufenbildung des Kabels 5 im Inneren des Gehäuses 9. Erst das Ende der Schlaufe des Kabels 5 ist durch eine Klemmbefestigung wie z.B. eine Klemmschelle 12 fixiert. Danach schließt die Verdrahtung 4 an. Dazu ist eine Gehäusedurchführung vorgesehen.

Das Gehäuse 9 kann als eigener Bauteil mit einer Konsole 13 zur Befestigung des Mantels 6 und mit einem freien Durchgang für das Kabel 5 zur Schlaufenbildung (Kabelschlaufen 10 bzw. 11) ausgebildet sein. Das Gehäuse 9 kann auch einen Teil der Wanne 7 bilden oder der äußere Montageflansch (Stulp) des Gehäuses 9 kann als Boden der Wanne 7 gestaltet sein. Für die Wanne 7 bietet sich eine Blechausführung im Tiefziehverfahren (Biege- oder Stanzverfahren) und für das Gehäuse 9 eine Kunststoffausführung an, wobei die Konsole 13 und die Durchführung zur Verdrahtung 4 an je einer Gehäuseschmalseite und ein Gehäusedeckel auf einer Flachseite vorgesehen sind.

Die Konsole 13 ragt somit in die Wanne 7 hinein und weist zur Fixierung an der Wanne 7 in einem Flansch 18 eine Bohrung 14 auf. Die Schraubenfeder verfügt an ihrem Ende über einen geraden Federfortsatz 15. Gemäß der Fig. 2 ist im Gehäuse 9 weiters in der Verlängerung der Konsolenöffnung eine Bohrung 16 ausgeführt. Die Bohrung 16 mündet in den Kanal der Bohrung 14 ein. Zur Befestigung des Mantels 6 (Schraubenfeder) am Gehäuse 9 wird der gerade Federfortsatz 15 durch die Bohrung 16 in die Bohrung 14 eingeschoben und durch Eindrehen einer Zylinderkopfschraube 17 am Gehäuse 9 befestigt. Gleichzeitig wird die Wanne 7 mit dem Gehäuse 9 mittels der Zylinderkopfschraube 17 mitverschraubt. Die Zylinderkopfschraube 17 hat somit eine Doppelfunktion.

Eine ähnliche Lagefixierung des Mantels 6 ist am Stecker 8 vorgesehen. Um die Schlaufenbildung im Inneren des Gehäuses 9 für die Aufnahme der Längenänderung zu ermöglichen bzw. zu begünstigen, wird das Kabel 5 erst an seinem Ende jenseits der Schlaufe (10 oder 11) durch die Klemmschelle 12 festgehalten.

In technischer Umkehr kann das Gehäuse 9 mit der Wanne 7 auch rahmenseitig vorgesehen sein. Der Stecker 8 ermöglicht das Aushängen des Flügels 2 ohne Eingriff in die elektrische Anlage.

## Patentansprüche

1. Kabelübergangsstück zur elektrischen Anspeisung von Verschlussantrieben, zwischen einem um eine Drehachse schwenkbaren Flügel, z.B. einem Türblatt, und einem Rahmen, z.B. Türstock, mit einem in einem elastischen und biegsamen Mantel, z.B. einer Schraubenfeder oder einem Panzerschlauch, verschiebbar geführten Kabel, wobei der Mantel sowohl am Flügel als auch am Rahmen gegebenenfalls lösbar befestigt ist und der Mantel bei geschlossenem Flügel in einer Ausnehmung, insbesondere in einer flügel- oder rahmenseitigen Wanne, im Falz des Flügels oder Rahmens liegt, **dadurch gekennzeichnet, dass** ein flaches Gehäuse (9), insbesondere aus Kunststoff, vorgesehen und der Mantel (6) mit einem Ende an eine Gehäusedurchführung an einer Gehäuseschmalseite angeschlossen ist und dass das Gehäuse (9) zur Aufnahme des beim Schließen des Flügels (2) aus dem Mantel (6) austretenden und durch die Gehäusedurchführung frei in den Gehäuseinnenraum einschiebbaren Kabels (5) bzw. der Kabelschlaufe (11) ausgebildet ist.

2. Kabelübergangsstück nach Anspruch 1, **dadurch gekennzeichnet, dass** im Inneren des Gehäuses (9) nächst einer Kabelaustrittsöffnung eine Klemmbefestigung, z.B. eine Klemmschelle (12), für das freie Ende der Kabelschlaufe (10 bzw. 11) vorgesehen ist.

3. Kabelübergangsstück nach Anspruch 1, **dadurch gekennzeichnet, dass** das Gehäuse (9) unmittelbar an die Wanne (7) anschließt und gegebenenfalls einstückig mit der Wanne (7) ausgebildet ist.

4. Kabelübergangsstück nach einem der Ansprüche 1 bis 3, **dadurch gekennzeichnet, dass** an dem flachen Gehäuse (9) an einer Schmalseite eine Konsole (13) zur Befestigung des Mantels (6) vorgesehen ist, und dass die Konsole (13) eine Öffnung für den freien Durchgang des Kabels (5) als Kabeldurchführung mit axialer Verschiebbarkeit des Kabels (5) aufweist.

5. Kabelübergangsstück nach Anspruch 4, **dadurch gekennzeichnet, dass** die Konsole (13) in das Innere der Wanne (7) ragt und zur Befestigung des Mantels (6) ein Gewinde an der Konsole (13) vorgesehen ist, dessen Mantelachse einen spitzen Winkel zur Längsachse der Wanne (7) einschließt.

6. Kabelübergangsstück nach einem der Ansprüche 1 bis 5, **dadurch gekennzeichnet, dass** das Kabel (5) an seinem dem Gehäuse (9) gegenüberliegenden Ende eine Steckverbindung (Stecker 8) zum Rahmen (1) bzw. Flügel (2) aufweist.

7. Kabelübergangsstück nach einem der Ansprüche 1 bis 6, **dadurch gekennzeichnet, dass** das Gehäuse (9) einen Flansch (18) sowie mindestens eine Zylinderkopfschraube (17) zur Befestigung aufweist und dass die Zylinderkopfschraube (17) als Klemmschraube für das Ende des Mantels (9) vorgesehen ist.

## Claims

1. Cable transition section for the electrical supply of lock drives between a leaf, for example a door leaf, which can be pivoted about a rotational axis, and a frame, for example a door frame, comprising a cable which is displaceably guided in an elastic and flexible sheath, for example a helical spring or a reinforced hose, wherein the sheath is optionally detachably fastened to the leaf and also to the frame and the sheath is located in a recess, when the leaf is closed, in particular in a well on the leaf side or on the frame side, in the rebate of the leaf or frame, **characterised in that** a flat housing (9), in particular made of plastics material, is provided and the sheath (6) is connected by one end to a housing feed-through on a narrow housing side and **in that** the housing (9) is configured to receive the cable (5) or the cable loop (9) which, when the leaf (2) is closed, exits from the sheath (6) and can be inserted freely into the housing interior through the housing feed-through.

2. Cable transition section according to claim 1, **characterised in that** a clamp fastening, for example a clip (12) is provided for the free end of the cable loop (10 or 11) in the interior of the housing (9) next to a cable outlet opening.

3. Cable transition section according to claim 1, **characterised in that** the housing (9) directly abuts the well (7) and is optionally configured in one piece with the well (7).

4. Cable transition section according to any one of claims 1 to 3, **characterised in that** a bracket (13) for fastening the sheath (6) is provided on the flat housing (9) on a narrow side, and **in that** the bracket (13) has an opening for the free passage of the cable (5) as a cable feed-through, with axial displaceability of the cable (5).

5. Cable transition section according to claim 4, **characterised in that** the bracket (13) projects into the interior of the well (7) and a thread is provided on the bracket (13) for fastening the sheath (6), the sheath axis of which forms an acute angle with respect to the longitudinal axis of the well (7).

6. Cable transition section according to any one of claims 1 to 5, **characterised in that** the cable (5), at its end opposing the housing (9), has a plug connection (plug 8) to the frame (1) or leaf (2).

7. Cable transition section according to any one of claims 1 to 6, **characterised in that** the housing (9) has a flange (18) and at least one cylinder head bolt (17) for fastening and **in that** the cylinder head bolt (17) is provided as a clamping bolt for the end of the sheath (9).

## Revendications

1. Section de transition de câble pour l'alimentation électrique d'entraînements de fermeture entre un battant susceptible de pivoter autour d'un axe de rotation, par exemple un vantail de porte, et un cadre, par exemple un châssis fixe de porte, avec un câble guidé de façon coulissante dans une enveloppe élastique et flexible, par exemple un ressort hélicoïdal ou un flexible métallique, l'enveloppe étant fixée éventuellement de façon amovible aussi bien sur le battant que le cadre et l'enveloppe étant disposée, lorsque le battant est fermé, dans un évidement, en particulier dans une cuve côté battant ou côté cadre, dans la feuillure du battant ou du cadre, **caractérisée en ce qu'**un boîtier (9) plat, en particulier en plastique, est prévu et l'enveloppe (6) est raccordée par une extrémité à un passage de boîtier sur un côté étroit du boîtier et **en ce que** le boîtier (9) est conçu pour le logement du câble (5) sortant de l'enveloppe (6) lors de la fermeture du battant (2) et pouvant être introduit par le passage de boîtier librement à l'intérieur du boîtier ou pour le logement de la boucle de câble (11).

2. Section de transition de câble selon la revendication 1, **caractérisée en ce qu'**à l'intérieur du boîtier (9), à côté d'une ouverture de sortie de câble, il est prévu une fixation par serrage, par exemple un collier de serrage (12) pour l'extrémité libre de la boucle de câble (10 ou 11).

3. Section de transition de câble selon la revendication 1, **caractérisée en ce que** le boîtier (9) est juxtaposé à la cuve (7) et est conçu éventuellement d'une seule pièce avec la cuve (7).

4. Section de transition de câble selon l'une quelconque des revendications 1 à 3, **caractérisée en ce que** sur le boîtier (9) plat sur un côté étroit est prévue une console (13) pour la fixation de l'enveloppe (6) et **en ce que** la console (13) présente une ouverture pour le passage libre du câble (5) comme traversée de câble avec une possibilité de coulissement axial du câble (5).

5. Section de transition de câble selon la revendication 4, **caractérisée en ce que** la console (13) dépasse à l'intérieur de cuve (7) et un filetage est prévu sur la console (13) pour la fixation de l'enveloppe (6), filetage dont l'axe d'enveloppe forme un angle aigu par rapport à l'axe longitudinal de la cuve (7).

6. Section de transition de câble selon l'une quelconque des revendications 1 à 5, **caractérisée en ce que** le câble (5) présente sur son extrémité opposée au boîtier (9) une liaison par enfichage (fiche 8) avec le cadre (1) ou le battant (2).

7. Section de transition de câble selon l'une quelconque des revendications 1 à 6, **caractérisée en ce que** le boîtier (9) présente une bride (18) et au moins une vis à tête cylindrique (17) pour la fixation et **en ce que** la vis à tête cylindrique (17) est prévue comme vis de serrage pour l'extrémité de l'enveloppe (9).
